# EUROPEAN PATENT SPECIFICATION

(11) **EP 0 417 083 B1**
(45) Date of publication and mention of the grant of the patent: **19.05.1993**
(21) Application number: 88903227.2
(22) Date of filing: 26.03.1988
(51) Int. Cl.: H04L 12/54, H04L 12/28

(54) **COMMUNICATION SWITCHING ELEMENT**
KOMMUNIKATIONSVERMITTLUNGSELEMENT
ELEMENT DE COMMUTATION DE TRANSMISSIONS

(43) Date of publication of application: 20.03.1991
(73) Proprietor: BELL TELEPHONE MANUFACTURING COMPANY Naamloze Vennootschap, B-2000 Antwerp (BE); ALCATEL N.V., NL-1077 XX Amsterdam (NL)
(72) Inventor: PAUWELS, Bart, Joseph, Gerard, B-2200 Borgerhout (BE)
(74) Representative: Vermeersch, Robert
(86) International application number: EP8800273
(87) International publication number: WO8909521

(56) References cited:
- WO-A-86/02510
- IEEE Journal on Selected Areas in Communications, vol. SAC-5, no. 8, October 1987, IEEE (New York, US); S. Nojima et al.: "Integrated services packet network using bus matrix switch", pages 1284-1292

## Description

The present invention relates to a communication switching element with buffer means associated with a plurality of signal inputs and signal outputs.

In such known switching elements buffer means can generally be associated with the signal inputs and/or with the signal outputs. In case they are associated with the signal inputs, when several signals arrive at a same signal input and have to be transmitted to a same signal output, the corresponding input buffer means may only be emptied at the signal transmission speed used on this signal output. This means that the following signals also arriving at this signal input and to be transmitted to another signal output have to wait for the completion of the transmission of the above preceding signals prior to being transmitted to their destination signal output even if the latter is not used.

In the switching element known from the PCT application published under No WO87/004579 and used in an Asynchronous Time Division (ATD) packet or cell switching system, buffer means associated with the signal outputs are preferred to avoid such input saturation. However, it requires at each of its signal outputs relatively large buffer means able to store signals simultaneously transmitted by all its signal inputs. Moreover, in order to be able to accept the signals from all the signal inputs, this known switching element operates at a speed or bitrate equal to the sum of the bitrates at which these signals are supplied at their respective signal input. As a result, the complexity of the element is increased.

A solution to reduce this switching speed and accordingly to decrease the complexity of the switching element is for instance proposed in the PCT/EP88/00212 application filed on March 11, 1988 and consists in subdividing each of the input signals into a number of parts, particularly sub packets in an ATD system. Thus, the switching speed of the element is also divided by the same number. However, additional circuits required to realise such subdivision and to combine these parts into an output signal also contribute to the complexity of the switching element.

In the article : "Packet Switching Interconnection Networks for Modular Systems" by D.M. Dias et al published in IEEE - COMPUTER of December 1981, pages 43 to 53, and more particularly on page 45 thereof, delta networks are considered wherein the links between stages of a packet switching network contain data buffers organized as first-in-first-out queues and each able to hold one or more packets. In this way the two signal inputs and the two signal outputs of a binary switching element part of an intermediate stage are each associated with such a buffer. Nevertheless, blocking can still occur for such a switching element when the buffer at one of its output terminals is full.

In the article "THE KNOCKOUT SWITCH: A SIMPLE, MODULAR ARCHITECTURE FOR HIGH-PERFORMANCE PACKET SWITCHING" by Y.S. Yeh et al published in the proceedings of ISS '87 pages 0801 to 0808 as well as in the European patent application by the same inventors published under No 0256702, a so-called N-input, N-output "knockout" packet switch uses N output interface units, each with N packet filters associated with the N signal inputs, a concentrator which achieves an N to L concentration, with L<<N, and an output buffer in order to have a lost packet rate as small as desired. However, if more than L packets or cells for the same signal output arrive simultaneously on the signal inputs, the extra packets are lost, even at a low transmission rate. Moreover, the modularity advantage of this known system increasing with the size thereof, it will preferably be used in large switching systems.

The present invention more particularly relates to a communication switching element for transferring digital signals, grouped in cells, from a plurality of signal inputs to a plurality of signal outputs, said switching element including a plurality of buffer means each associated and permanently dedicated to a distinct connection between any predetermined pair of signal input and signal output, and including a plurality of priority circuits each interconnecting the buffer means of a respective associated set and each allowing said transfers one at a time from the buffer means of said associated set.

Such a switching element is already known in the art, e.g. from the International Patent Application WO86/02510 published on April 24, 1986. Therein, all the signal inputs are simultaneously able to transfer their input signals to the dedicated buffer means used. Hence, the speed of transmission of the signals between an input and an output never needs to exceed the speed of the input signals and thus no additional speed reduction circuit is required. Moreover, because each signal output uses a plurality of buffer means which are each dedicated to a distinct signal input and only receive signals therefrom, the size of these buffer means may be relatively small. Furthermore, the priority circuits thereof allow the cells or packets to exit from the buffer means either in the order of their arrival therein or according to a priority scheme by which the cell having the highest priority exits first.

This means that in the known switching element the buffer means are emptied either in sequence when all the cells have a same priority or In an order dependent on the degree of priority of each particular cell.

A problem with the known switching element is that, when for instance there is a high cell traffic between a particular signal input and a particular signal output, the corresponding buffer means could be filled faster than they are emptied. Indeed, in case all the cells have a same priority and the buffer means of a same set are thus emptied in sequence, the above fastly filled buffer means could rapidly overflow whereby some cells may be lost. Moreover, when the cells have different degrees of priority and when for instance most of the cells having a low priority degree are loaded in the above high traffic buffer means, the risk of cell loss is even greater.

An object of the present invention is to provide a switching element of the last mentioned known type but offering advantages over the known solutions including versatility in the ways it can be used. More particularly an object is to provide a switching element wherein the order in which the buffer means are emptied can be adapted to some particular circumstances, i.e. that the order will no more only depend on a possible degree of priority associated to each cell.

According to the invention, this object is achieved due to the fact that each of said priority circuits is constituted by a token ring wherein a priority indicating token signal is successively passed to the buffer means of the associated set to allow the one receiving said token signal to transfer at least one of said cells to a signal output associated in common to the buffer means of said set prior to passing said token signal to another buffer means of said set.

In this way, the order in which the buffers means are emptied is no more only defined by a possible degree of priority associated to each cell but can be adapted to particular circumstances. For instance, when there is a risk of overflow of some buffer means the token signal may be given in priority to the latter.

It is to be noted that the case of cells having different degrees of priority will not be considered in more detail hereafter.

Another characteristic feature of the present invention is that each of said sets of buffer means is coupled to a distinct signal output.

Then, the traffic of cells to a particular signal output does not affect the traffic of cells to other signal outputs.

In a preferred embodiment, each of said token rings includes means to detect the degree of filling of the buffer means of the associated set in order to pass said token signal in priority to the buffer means of said set having the highest degree of filling.

This reduces even more the risk of overflow of the buffer means, i.e. to lose cells. Such a particular circumstance may occur when there is a temporary high cell traffic between one signal input and one signal output as mentioned above.

Another general problem with switching elements such as the known ones mentioned above is that it is not easy to distribute an input cell to more than one signal output, i.e. to perform point-to-multipoint transmission (multicast or broadcast connections). Indeed, the input cell has then to be copied several times or to several buffer means in order to transmit each cell - or a copy thereof - to the corresponding destination signal output, this requiring additional complex circuits.

Still another object of the present invention is to provide a switching element of the above known type but wherein point-to-multipoint transmission is facilitated.

According to the invention this other object is achieved due to the fact that each signal input is coupled to an associated second set of buffer means via a common input data bus and via a selection bus to select the buffer means of said associated second set into which a cell supplied to said common input data bus has to be loaded.

In this way, an input cell is automatically copied and loaded into all the buffer means selected by the selection bus and associated to the respective signal outputs participating in the point-to-multipoint transmission. Moreover, identical cells, i.e. with a same header, are transmitted to the different signal outputs.

Also in a preferred embodiment, each cell has a header indicative of its destination and the buffer means are constituted by first-in-first-out (FIFO) memories able to store a plurality of cells.

It is to be noted that in the present switching element, each buffer means of the second set also forms part of a distinct one of the first mentioned sets and that these first and second sets of buffer means are arranged in a matrix comprising a number of buffer means equal to the product of the number of signal inputs and the number of signal outputs, with at least one of said numbers being larger than 2.

The new switching element further includes a plurality of receiver means, each interconnecting a respective signal input to its associated common input data bus and selection bus, said receiver means being able to transfer said cells received at said signal input to said common input data bus and to supply to said selection bus a signal to select at least one of said buffer means of said associated second set. These receiver means include conversion means to convert cells received in a serial way at the serial inputs into parallel signals prior to transmit them to the corresponding input data bus.

Furthermore, each of said receiver means includes cell buffer means to receive a cell with its header from said signal input and coupled to a routing table able to provide in function of said received header a new header for which said received header will be substituted, said cell with said new header being then transmitted by said cell buffer means to said input data bus.

The routing tables of the receiver means may be coupled to common processor means able to update the operation of said routing tables.

On the one hand, these common processor means are coupled to the cell buffer means of said receiver means in order to transmit therethrough cells from said common processor means and intended to the corresponding input data busses.

On the other hand, the cell buffer means of said receiver means are coupled to said common processor means to transmit thereto cells received from the corresponding signal input.

The above mentioned and other objects and features of the invention will become more apparent and the invention itself will be best understood by referring to the following description of an embodiment taken in conjunction with the accompanying drawings wherein :
Fig. 1 is a schematic representation of a communication switching element SE according to the invention;
Fig. 2 shows an example of use of the switching element SE of Fig. 1 as a module of a 16 x 16 switching network; and
Fig. 3 shows a receiver port RP(m) of Fig. 1 in more detail.

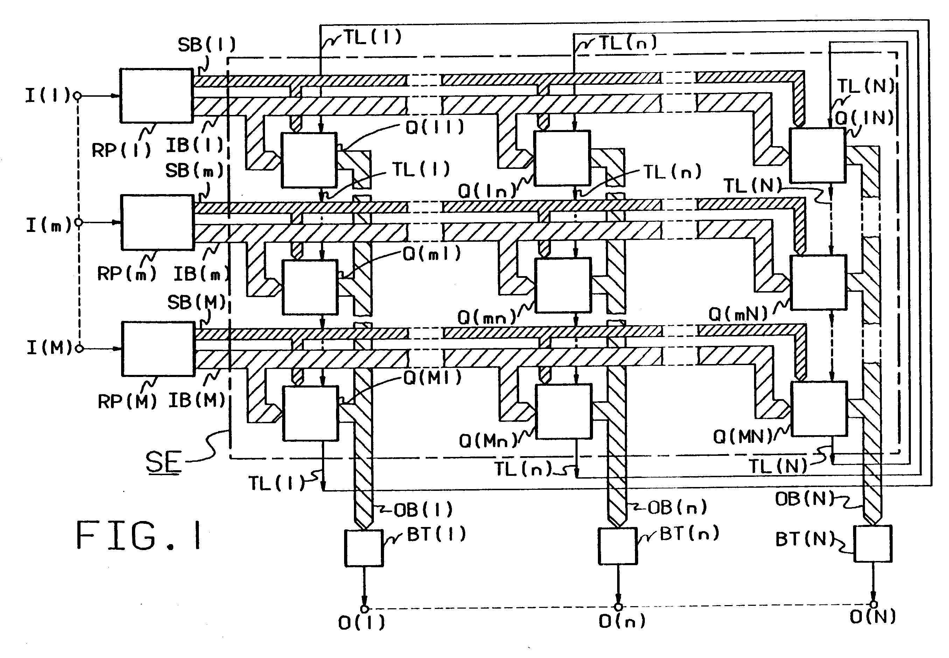

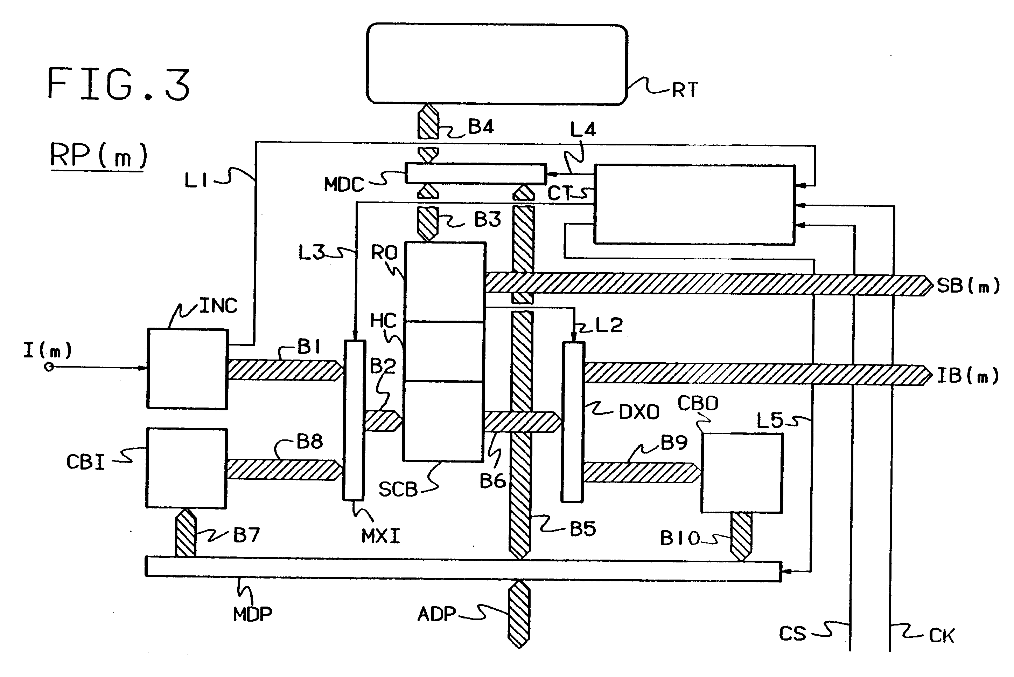

The communication switching element SE shown in Fig. 1 forms part of a communication switching network wherein a plurality of such elements are interconnected in a modular way and of which an example will be given later. Each switching element SE is able to switch fixed length packets or cells of digital signals transmitted according to Asynchronous Transfer Mode (ATM), previously called Aynchronous Time Division (ATD), techniques from a plurality of M signal inputs I(1) to I(M), coupled thereto via respective like receiver ports RP(1) to RP(M), to a plurality of N signal outputs O(1) to O(N) to which the element is coupled via respective like bus termination circuits BT(1) to BT(N). A description of the structure and the operation of a receiver port, say RP(m) with m being an integer between 1 and M, will be given later by making reference to Fig. 3. Any bus termination circuit, say BT(n) with n being an integer between 1 and N, performs a buffering function and, if required, a parallel-to-series conversion of the cells supplied to it. Each cell comprises for instance 35 bytes of which 3 bytes are used as a header containing 2 bytes or 16 bits constituting a virtual circuit number, 5 bits for error checking and correction and 3 spare bits, and of which the 32 remaining bytes constitute an information field.

The switching element SE includes M x N buffer means or queues arranged in a matrix of M rows Q(11) to Q(1N); ...; Q(m1) to Q(mN); ...; Q(M1) to Q(MN) and N columns Q(11) to Q(M1); ... Q(1n) to Q(Mn); ...; Q(1N) to Q(MN). Each of these queues Q(11) to Q(MN) is for instance constituted by a first-in-first-out (FIFO) memory able to store, e.g., 10 cells of 35 bytes. Each of the M receiver ports RP(1)/(M), e.g. RP(m), is connected to a respective m-th row comprising a set of N queues Q(m1) to Q(mN) through an associated 8 lines common input data bus IB(m) and an associated N lines selection bus SB(m) with each of these N lines associated to a distinct one of the N columns of queues. Each of these N columns, say the n-th, comprises a set of M queues Q(1n) to Q(Mn) and is connected to a respective bus termination circuit BT(n) by an associated 8 lines common output data bus OB(n). The receiver port RP(m) associated to the sets of N queues of an m-th row is able to convert the cells received, e.g., in a serial way on its signal input I(m) into a succession of parallel bytes and apply them to anyone of the N queues of the set of this m-th row via the associated input data bus IB(m). One or more queues into which a cell has to be loaded are selected by means of the lines of the selection bus SB(m) respectively associated to the sets of columns to which these queues belong. A point-to-point transmission is thus performed when only one column, i.e. one queue, is selected, whilst a point-to-multipoint transmission, also called multicast, takes place when more columns, i.e. more queues of a same row, are selected as will become clear later. On the other hand, multipoint-to-point transmission, also called concentration, may be performed when several queues of a same column are selected by different selection busses.

All the queues Q(1n) to Q(Mn) of a set of a same n th column are further interconnected by a priority circuit constituted by a token line TL(n) which is connected in a ring and wherein a token signal is transmitted between the interconnected queues according to an algorithm described later and indicating the queue having transmission priority as well as the number of cells this queue is allowed to transmit to the corresponding bus termination circuit BT(n) via the output data bus OB(n).

Due to the modularity of the switching element SE, all the queues Q(m1) to Q(mN) of a same m-th row or all the queues Q(1n) to Q(Mn) of a same n-th column may be arranged for instance on a same chip of integrated circuits and these chips or modules may be easily interconnected. As a consequence, the number M of signal inputs of an existing M x N switching network may be increased just by adding rows of queues. Similarly, the number N of signal outputs of an existing M x N switching network may be increased by adding columns of queues. The only restriction in this last case is the number of selection lines constituting the selection bus SB. Indeed, as mentioned above, each queue of a row is associated to a distinct line of this selection bus SB.

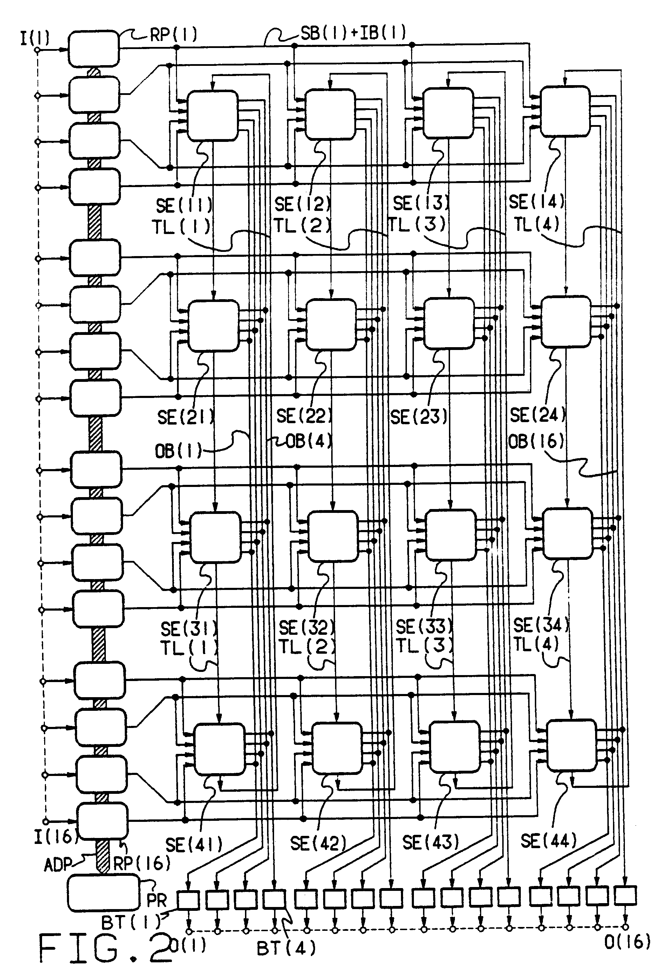

An example of a 16 x 16 switching network wherein switching elements SE each comprising 4 x 4 queues grouped on a same chip are used is shown in Fig. 2. This switching network comprises 4 rows of 4 such switching elements SEC(11) to SE(14); ... ; SE(41) to SE (44). The left hand side of Fig. 2 shows 16 receiver ports RP(1) to RP(16) all connected to a processor PR via a bidirectional bus ADP and having respective signal inputs I(1) to I(16). For each receiver port the input data bus and the selection bus are represented together by a single line. For instance SB(1)+IB(1) is associated to the receiver port RP(1). The output data busses OB(1) to OB(16) connected to the respective bus termination circuits BT(1) to BT(16) are also each represented by a single line. The switching elements of each of the columns SE(11) to SE(41); ... ; SE(14) to SE(44) are interconnected via a respective token line TL(1); ... ; TL(4). Each of these token lines is connected in a ring, i.e. that the token line output of a bottom switching element, e.g. SE(41), is connected to the token line input of a top switching element, e.g. SE(11).

Depending on the application different algorithms may be used to control the token lines.

The most straightforward one consists in passing the token signal successively to all the queues of a same column :
- if a queue is not empty when receiving the token signal it has priority to transmit one cell to the associated output data bus and holds the token signal for the duration of the transmission of this cell;
- if the queue is empty, the token signal is immediately passed to the next queue in the column so that no time is wasted.

A variant of the above is to make the number of cells which are allowed to be transmitted by the priority dependent on the degree of filling of this queue. This reduces the danger of cell loss by queue overflow.

In another solution the token ring is constituted by a ring of status lines (not shown) interconnecting all the queues of a same column and indicating the one having the highest degree of filling. In order to decrease the danger of cells loss the token signal is given in priority to this queue storing the highest number of cells.

The receiver port RP(m) with its signal input I(m), its input data bus IB(m) and its N-lines selection bus SB(m) is shown in more detail in Fig. 3. It includes a synchronisation circuit INC which has the signal input I(m) and is connected by a data bus B1 to a first input of a multiplexer MXI and by a control line L1 to a controller CT. INC is also able to perform series-to-parallel conversion if the internal width of the data busses, e.g. the bus B1, is wider than that of the input line, by which INC is connected to the signal input I(m), i.e. for instance when the cells are received in a serial way on this signal input I(m) as mentioned above. The output of the multiplexer MXI is connected by a data bus B2 to a single cell buffer SCB which is itself connected, in series with a header check and correction circuit HC, to a routing circuit RO. The routing circuit RO is connected to a first terminal of a multiplexer/demultiplexer MDC by a bidirectional bus B3. A second terminal of this multiplexer/demultiplexer MDC is connected to a routing table RT by a bidirectional bus B4 whilst a third terminal of MDC is connected to a first terminal of another multiplexer/demultiplexer MDP via a bidirectional bus B5. The multiplexing part of MDC has inputs constituted by the above first and third terminals and an output constituted by the above second terminal, whilst the demultiplexing part of MDC has an input constituted by the second terminal and outputs constituted by the first and third terminals. The single cell buffer SCB is also connected via a bus B6 to the input of a demultiplexer DXO which has a first output connected to the input data bus IB(m), whilst the routing circuit RO is directly connected to the selection bus SB(m) and controls the selection input of this demultiplexer DXO via a control line L2. The controller CT receives a clock signal via a line CK and control signals from the series-to-parallel converter and synchronization circuit INC via the line L1 and from a processor PR (shown in Fig. 2) via a selection line CS (Chip Select). This controller CT controls the operation of the above multiplexer MXI and the multiplexers/demultiplexers MDC and MDP via the respective selection lines L3, L4 and L5. As shown in Fig. 2, the processor PR is connected to all the receiver ports of a switching network by a bidirectional data and address bus ADP which is connected to a second terminal of the multiplexer/demultiplexer MDP. MDP has a third terminal connected via a bus B7 to an input cell buffer CBI which is itself connected to a second input of the multiplexer MXI via a bus B8. A second output of the demultiplexer DXO is connected to an output cell buffer CBO via a bus B9 and this output cell buffer CBO is connected to a fourth terminal of the multiplexer/demultiplexer MDP via a bus B10. The multiplexing part of MDP has inputs constituted by the above first and fourth terminals and an output constituted by the above second terminal, whilst the demultiplexing part of MDP has an input constituted by this second terminal and outputs constituted by the first and third terminals.

The cells supplied in a serial way to the series-to-parallel converter and synchronization circuit INC are converted therein into sets of e.g., 8 parallel bits which are then transmitted and latched into the single cell buffer SCB via the multiplexer MXI. When an error in the synchronization of an incoming cell is detected by the series-to-parallel converter and synchronization circuit INC, a signal is transmitted via the line L1 to the controller CT which is able to execute the appropriate action. When a cell is stored in SCB the header thereof is sent to the header check and correction circuit HC for testing its validity and for correcting some types of recoverable errors. This header is then transmitted via the multiplexer/demultiplexer MDC to the routing table RT which contains a table wherein headers of cells and associated routing information are stored. In the routing table RT the incoming header acts as a pointer for this table and is translated into an outgoing header which is returned, together with routing information, to the routing circuit RO. The outgoing header is directly transmitted to the single cell buffer SCB where it is substituted for the incoming header and the updated cell is then transmitted on the input data bus IB(m) via the demultiplexer DXO. Simultaneously, the routing information constituted, e.g., by an N-bits binary word is transmitted to the routing circuit RO which applies it, one bit per line, to the N-lines selection bus SB(m) and at the same time activates the selection line L2 of the demultiplexer DXO which accordingly selects its first output. Each line of the selection bus SB being connected to a distinct queue, the value of the bit transmitted on this line indicates whether the corresponding queue is selected (bit=1) or not (bit=0) for receiving the cell then transmitted on the input data bus IB(m).

The contents of the routing table may be updated by the processor PR which has a direct access to it via the busses ADP, B5 and B4 and the multiplexers/demultiplexers MDP and MDC. Furthermore, the processor PR may transmit a cell on the input data bus IB(m) or receive a cell via the signal input I(m) as will be described below. In case of a cell to be transmitted by the processor PR to the input data bus IB(m), this cell is loaded by PR in the input cell buffer CBI via the bus ADP, the multiplexer/demultiplexer MDP and the bus B7. As soon as no cell is transmitted by the parallel-to-series converter and synchronization circuit INC on the bus B1, the cell stored in the input cell buffer CBI is transmitted to the single cell buffer SCB via the busses B8 and B2 and the multiplexer MXI. From there this cell follows the same way as those coming from the input I(m). On the other hand, a cell destined to the processor PR follows the same way as a cell going to the input data bus IB(m) but in the demultiplexer DXO it is routed to the output cell buffer CBO via the bus B9. From the output cell buffer CBO this cell is transmitted to the processor PR via the multiplexer/demultiplexer MDP and the busses B10 and ADP.

A point-to-multipoint transmission of cells is largely facilitated by the structure of the switching element SE and its associated receiver ports RP(1) to RP(M). More particularly, contrary to a switching element wherein point-to-multipoint transmission is only possible by making copies of the cell to be transmitted and by changing the headers of these copies to address corresponding signal outputs, the present element SE operates in a different way. Indeed, the header of a cell is here not directly used to address a signal output so that this header needs not be changed for each signal output participating in the multipoint transmission. Instead, in this switching element SE the correct signal outputs O(1) to O(M) are solely selected by means of their respective associated lines of the selection bus SB. These lines are activated (bit=1) when the associated signal output is selected, and de-activated (bit=0) otherwise. As a consequence, each cell transmitted by a receiver port RP(m) on the input data bus IB(m) is copied into all the selected queues Q(m1)/(mN) and from there to all the selected signal outputs O(1)/(N).

While the principles of the invention have been described above in connection with specific apparatus, it is to be clearly understood that this description is made only by way of example and not as a limitation on the scope of the invention.

## Claims

1. Communication switching element (SE) for transferring digital signals, grouped in cells, from a plurality of signal inputs (I(1) to I(M)) to a plurality signal outputs (O(1) to O(N)), said switching element including a plurality of buffer means (Q(11) to Q(MN)) each associated and permanently dedicated to a distinct connection between any predetermined pair of signal input (I(1)/(M)) and signal output (O(1)/(N)), and including a plurality of priority circuits (TL(1) to TL(N)) each (TL(n)) interconnecting the buffer means (Q(1n) to Q(Mn)) of a respective associated (n-th) set and each allowing said transfers one at a time from the buffer means (Q(1n) to Q(Mn)) of said associated set, characterized in that each (TL(n)) of said priority circuits (TL(1) to TL(N)) is constituted by a token ring wherein a priority indicating token signal is successively passed to the buffer means (Q(1n) to Q(Mn)) of the associated (n-th) set to allow the one receiving said token signal to transfer at least one of said cells to a signal output (O(n)) associated in common to the buffer means of said set prior to passing said token signal to another buffer means of said set.

2. Communication switching element according to claim 1, characterized in that each (n-th) of said sets of buffer means (Q(1n) to Q(Mn)) is coupled to a distinct signal output (O(n)).

3. Communication switching element according to claim 1, characterized in that each (TL(n)) of said token rings (TL(1) to TL(N)) includes means to detect the degree of filling of the buffer means (Q(1n) to Q(Mn)) of the associated (n-th) set in order to pass said token signal in priority to the buffer means of said set having the highest degree of filling.

4. Communication switching element according to claim 1, characterized in that each signal input (I(m)) is coupled to an associated second (m-th) set of buffer means (Q(m1) to Q(mN)) via a common input data bus (IB(m)) and via a selection bus (SB(m)) to select the buffer means of said associated second set into which a cell supplied to said common input data bus has to be loaded.

5. Communication switching element according to claim 4, characterized in that each buffer means (Q(m1) to Q(mN)) of said second (m-th) set also forms part of a distinct one of said first mentioned sets.

6. Communication switching element according to claim 4, characterized in that said first (Q(1n) to Q(Mn) and second (Q(m1) to Q(mN)) sets of buffer means are arranged in a matrix comprising a number (MxN) of buffer means (Q(11) to Q(MN)) equal to the product of the number (M) of signal inputs (I(1) to I(M)) and the number (N) of signal outputs (O(1) to O(N)), with at least one of said numbers being larger than 2.

7. Communication switching element according to claim 4, characterized in that it further includes a plurality of receiver means (RP(1) to RP(M)), each (RP(m)) interconnecting a respective signal input (I(m)) to its associated common input data bus (IB(m)) and selection bus (SB(m)), said receiver means being able to transfer said cells received at said signal input to said common input data bus and to supply to said selection bus a signal to select at least one of said buffer means (Q(m1) to Q(mN)) of said associated second (m-th) set.

8. Communication switching element according to claim 7, characterized in that said receiver means (RP(1) to RP(M)) include conversion means (INC; Fig. 3) to convert cells received in a serial way at the serial inputs (I(1) to I(m)) into parallel signals prior to transmit them to the corresponding input data bus (IB(1) to IB(M)).

9. Communication switching element according to claim 1, characterized in that each of said cells has a header indicative of its destination.

10. Communication switching element according to claims 8 and 9, characterized in that each (RP(m)) of said receiver means (RP(1) to RP(M)) includes cell buffer means (SCB; Fig. 3) to receive a cell with its header from said signal input (I(m)) and coupled to a routing table (RT; Fig. 3) able to provide in function of said received header a new header for which said received header will be substituted, said cell with said new header being then transmitted by said cell buffer means to said input data bus (IB(m)).

11. Communication switching element according to claim 10, characterized in that the routing tables (RT) of said receiver means (RP(1) to RP(M) are coupled (ADP, B5, B4; Fig. 3) to common processor means (PR; Fig. 2) able to update the operation of said routing tables.

12. Communication switching element according to claim 11, characterized in that said common processor means (PR) are coupled to the cell buffer means (SCB) of said receiver means (RP(1) to RP(M)) in order to transmit therethrough cells from said common processor means and intended to the corresponding input data busses (IB(1) to IB(M)).

13. Communication switching element according to claim 11, characterized in that the cell buffer means (SCB) of said receiver means (RP(1) to RP(M)) are coupled to said common processor means (PR) to transmit thereto cells received from the corresponding signal input (I(1) to I(M)).

14. Communication switching element according to claim 1, characterized in that said buffer means (Q(1n) to Q(Mn)) are constituted by first-in-first-out (FIFO) memories able to store a plurality of said cells.

## Patentansprüche

1. Kommunikationsvermittlungselement (SE) zum Transfer von in Zellen gruppierten digitalen Signalen von einer Mehrzahl von Signaleingängen [I(1) bis I(M)] zu einer Mehrzahl von Signalausgängen [O(1) bis O(N)], wobei das genannte Vermittlungselement eine Mehrzahl von Pufferspeichermitteln [Q(11) bis Q(MN)] aufweist, die je einer bestimmten Verbindung zwischen irgend einem Paar von Signaleingängen [I(1)/(M)] und Signalausgängen [O(1)/(N)] zugeordnet und dauernd zugeteilt sind, und weiter eine Mehrzahl von Prioritätsschaltungen [TL(1) bis TL(N)] aufweist, welche je [TL(n)] die Pufferspeichermittel [Q(1n) bis Q(Mn)] eines entsprechenden, zugeordneten (n-ten) Satzes verbinden und je die Transfers, je einen auf einmal, von den Pufferspeichermitteln [Q(1n) bis Q(Mn)] erlauben, dadurch gekennzeichnet, dass jede [TL(n)] der genannten Prioritätsschaltungen [TL(1) bis TL(N)] durch einen Tokenring gebildet wird, in welchem ein die Priorität angebendes Tokensignal sukzessive zu den Pufferspeichermitteln [Q(1n) bis Q(Mn)] des zugeordneten (n-ten) Satzes weitergegeben wird, um jenen, die das genannte Tokensignal empfangen, den Transfer von mindestens einer der genannten Zellen zu einem Signalausgang [O(n)], der den Pufferspeichermitteln dieses Satzes gemeinsam zugeordnet ist, zu erlauben, bevor das genannte Tokensignal zu andern Pufferspeichermitteln dieses Satzes weitergegeben wird.

2. Kommunikationsvermittlungselement gemäss Anspruch 1, dadurch gekennzeichnet, dass jeder (n-te) der genannten Sätze von Pufferspeichermitteln [Q(1n) bis Q(Mn)] mit einem bestimmten Signalausgang [O(n)] gekoppelt ist.

3. Kommunikationsvermittlungselement gemäss Anspruch 1, dadurch gekennzeichnet, dass jeder [TL(n)] der genannten Tokenringe [TL(1) bis TL(N)] Mittel aufweist, um den Füllungsgrad der Pufferspeichermittel [Q(1n) bis Q(Mn)] des zugeordneten (n-ten) Satzes zu detektieren, um das genannte Tokensignal den Pufferspeichermitteln des Satzes zukommen zu lassen, die den höchsten Füllungsgrad aufweisen.

4. Kommunikationsvermittlungselement gemäss Anspruch 1, dadurch gekennzeichnet, dass jeder Signaleingang [I(m)] mit einem zugeordneten zweiten (m-ten) Satz von Pufferspeichermitteln [Q(m1) bis Q(mN)] über einen gemeinsamen Eingangsdatenbus [IB(m)] und über einen Auswahlbus [SB(m)] gekoppelt ist, um die Pufferspeichermittel des genannten zweiten zugeordneten Satzes auszuwählen, in welche eine an den genannten gemeinsamen Eingangsdatenbus angelegte Zelle zu laden ist.

5. Kommunikationsvermittlungselement gemäss Anspruch 4, dadurch gekennzeichnet, dass jedes der genannten Pufferspeichermittel [Q(m1) bis Q(mN)] des genannten zweiten (m-ten) Satzes auch Teil eines bestimmten der genannten ersten Sätze bildet.

6. Kommunikationsvermittlungselement gemäss Anspruch 4, dadurch gekennzeichnet, dass die genannten ersten [Q(1n) bis Q(Mn)] und zweiten [Q(m1) bis Q(mN)] Sätze von Pufferspeichermitteln in Form einer Matrix angeordnet sind, welche eine Anzahl (MxN) von Pufferspeichermitteln [Q(11) bis Q(MN)] gleich dem Produkt aus der Anzahl (M) der Signaleingänge [I(1) bis I(M)] und der Anzahl (N) der Signalausgänge [O(1) bis O(N)] aufweisen, wobei mindestens eine der genannten Anzahlen grösser als 2 ist.

7. Kommunikationsvermittlungselement gemäss Anspruch 4, dadurch gekennzeichnet, dass es weiter eine Mehrzahl von Empfängermitteln [RP(1) bis RP(M)] aufweist, von denen jedes [RP(m)] einen entsprechenden Signaleingang [I(m)] mit seinem zugeordneten gemeinsamen Eingangsdatenbus [IB(m)] und Auswahlbus [SB(m)] verbindet, wobei die genannten Empfängermittel in der Lage sind, den Transfer der am genannten Signaleingang empfangenen Zellen zum genannten gemeinsamen Eingangsdatenbus durchzuführen und dem genannten Auswahlbus ein Signal zu liefern, um mindestens eines der genannten Pufferspeichermittel [Q(m1) bis Q(mN)] des genannten zweiten zugeordneten Satzes auszuwählen.

8. Kommunikationsvermittlungselement gemäss Anspruch 7, dadurch gekennzeichnet, dass die genannten Empfängermittel [RP(1) bis RP(M)] Wandlermittel (INC; Fig. 3) aufweisen, um an den seriellen Eingängen [I(1) bis I(m)] in serieller Art empfangene Zellen in parallele Signale zu wandeln, bevor sie an den entsprechenden Eingangsdatenbus [IB(1) bis IB(M)] übertragen werden.

9. Kommunikationsvermittlungselement gemäss Anspruch 1, dadurch gekennzeichnet, dass jede der genannten Zellen einen Kopf aufweist, der kennzeichnend ist für ihr Ziel.

10. Kommunikationsvermittlungselement gemäss Anspruch 8 und 9, dadurch gekennzeichnet, dass jedes [RP(m)] der genannten Empfängermittel [RP(1) bis RP(M)] Zellenpufferspeichermittel (SCB; Fig. 3) aufweist zur Aufnahme einer Zelle mit ihrem Kopf vom genannten Signaleingang [I(m)], welche mit einer Leitwegtabelle (RT; Fig. 3) gekoppelt sind und in Funktion des empfangenen Kopfes einen neuen Kopf als Ersatz für den empfangenen vorsehen können, wobei die genannte Zelle dann mit dem neuen Kopf durch die genannten Zellenpufferspeichermittel zum genannten Eingangsdatenbus [IB(m)] übermittelt wird.

11. Kommunikationsvermittlungselement gemäss Anspruch 10, dadurch gekennzeichnet, dass die Leitwegtabellen (RT) der genannten Empfängermittel [RP(1) bis RP(M)] mit gemeinsamen Prozessormitteln (PR; Fig. 2) gekoppelt (ADP, B5, B4; Fig. 3) sind, welche in der Lage sind, die Arbeitsweise der genannten Leitwegtabellen aufzudatieren.

12. Kommunikationsvermittlungselement gemäss Anspruch 11, dadurch gekennzeichnet, dass die genannten gemeinsamen Prozessormittel (PR) mit den Zellenpufferspeichermitteln (SCB) der genannten Empfängermittel [RP(1) bis RP(M)] gekoppelt sind, um durch diese hindurch von den genannten gemeinsamen Prozessormitteln stammende und für die entsprechenden Eingangsdatenbusse [IB(1) bis IB(M)] bestimmte Zellen zu übertragen.

13. Kommunikationsvermittlungselement gemäss Anspruch 11, dadurch gekennzeichnet, dass die genannte Zellenpufferspeichermittel (SCB) der genannten Empfängermittel [RP(1) bis RP(M)] mit den genannten gemeinsamen Prozessormitteln (PR) gekoppelt sind, um von den entsprechenden Signaleingängen [I(1) bis I(M)] empfangene Zellen dahin zu übertragen.

14. Kommunikationsvermittlungselement gemäss Anspruch 1, dadurch gekennzeichnet, dass die genannten Pufferspeichermittel [Q(1n) bis Q(Mn)] durch FIFO-Speicher gebildet werden, die eine Mehrzahl der genannten Zellen speichern können.

## Revendications

1. Elément de commutation de télécommunications (SE) pour le transfert de signaux numériques, groupés en cellules, d'une pluralité de ports d'entrée [I(1) à I(M)] vers une pluralité de ports de sortie [O(1) à O(N)], ledit élément de commutation comprenant une pluralité d'organes tampon [Q(11) à Q(MN)] chacun associés et dédiés en permanence à une connexion donnée entre une paire prédéterminée quelconque constituée d'un port d'entrée [I(1)/(M)] et d'un port de sortie [O(1)/(N)], et comportant une pluralité de circuits de priorité [TL(1) à TL(N)], chacun des circuits de priorité [TL(n)] interconnectant les organes tampon [Q(1n) à Q(Mn)] d'un ensemble associé (n^{ième}) et permettant chacun desdits transferts, un par un, à partir des organes tampon [Q(1n) à Q(Mn)] dudit ensemble associé, caractérisé en ce que chacun [TL(n)] desdits circuits de priorité [TL(1) à TL(N)] est constitué d'un anneau à jeton dans lequel un signal de jeton indiquant une priorité est transféré successivement aux organes tampon [Q(1n) à Q(Mn)] de l'ensemble associé (n^{ième}) pour permettre à celui qui reçoit le signal à jeton de transférer au moins une des cellules vers un port de sortie [O(n)] commun aux organes tampon de l'ensemble avant de transférer le signal à jeton un autre organe tampon dudit ensemble.

2. Elément de commutation de communication selon la revendication 1, caractérisé en ce que chacun (n^{ième}) desdits ensembles d'organes tampon [Q(1n) à Q(Mn)] est relié à un port de sortie distinct [O(n)].

3. Elément de commutation de communication selon la revendication 1, caractérisé en ce que chacun [TL(n)] desdits anneaux à jeton [TL(1) à TL(n)] comporte des moyens susceptibles de détecter le taux de remplissage des organes tampon [Q(1n) à Q(Mn)] de l'ensemble associé (n^{ième}) afin de pouvoir transférer ledit signal à jeton de façon prioritaire vers les organes tampon dudit ensemble qui ont le taux de remplissage le plus élevé.

4. Elément de commutation de communication selon la revendication 1, caractérisé en ce que chaque port d'entrée [I(m)] est couplé à un deuxième ensemble (m^{ième}) associé d'organes tampon [Q(m1) à Q(nN)] via un bus commun de données d'entrée [IB(m)] et via un bus de sélection [SB(m)] pour choisir les organes tampon dudit deuxième ensemble associé, dans lesquels une cellule fournie audit bus commun de données d'entrée doit être changée.

5. Elément de commutation de communication selon la revendication 4, caractérisé en ce que chaque organe tampon [Q(m1) à Q(mN)] d'un desdits deuxièmes ensembles (m^{ième}) constitue également une partie d'un desdits premiers ensembles, les organes tampon d'un desdits deuxièmes ensembles étant partie de premiers ensembles différents.

6. Elément de commutation de communication selon la revendication 4, caractérisé en ce que lesdits premiers ensembles d'organes tampon [Q(1n) à Q(Mn)] et deuxièmes ensembles d'organes tampon [Q(m1) à Q(mN)] sont disposés dans une matrice comprenant un nombre (MxN) d'organes tampon [Q(11) à Q(MN)] qui est égal au produit du nombre (M) de ports d'entrée [I(1) à I(M)] et le nombre (N) de ports de sortie [O(1) à O(N)], au moins un desdits nombre étant supérieur à 2.

7. Elément de commutation de communication selon la revendication 4, caractérisé en ce qu'il comporte en outre une pluralité de moyens de réception [RP(1) à RP(M)], reliant chacun un port d'entrée respectif [I(m)] à son bus commun d'entrée de données associé [IB(m)] et à son bus de sélection [SB(m)] associé, lesdits moyens de réception étant susceptibles de transférer lesdites cellules reçues audit port d'entrée vers ledit bus commun d'entrée de données et de fournir audit bus de sélection un signal capable de sélectionner au moins un desdits organes tampon [Q(m1) à Q(mN)] dudit deuxième ensemble (m^{ième}) associé.

8. Elément de commutation de communication selon la revendication 7, caractérisé en ce que lesdits moyens de réception [RO(1) à RP(M)] comprennent des moyens de conversion (INC; figure 3) capables de convertir en signaux parallèles des cellules reçues en série sur les entrées [I(1) à I(m)] avant de les transmettre au bus d'entrée de données correspondant [IB(1) à IB(M)).

9. Elément de commutation de communication selon la revendication 1, caractérisé en ce que chacun desdites cellules comporte un en-tête qui indique sa destination.

10. Elément de commutation de communication selon les revendications 8 et 9, caractérisé en ce que chacun [RP(m)] desdits moyens de réception [RP(1) à RP(M)] comporte des organes tampon pour cellules (SCB; figure 3) aptes à recevoir une cellule avec son en-tête provenant dudit port d'entrée [I(m)] et couplés à une table d'acheminement (RT; figure 3) apte à fournir, en fonction dudit en-tête reçu, un nouvel en-tête remplaçant ledit en-tête reçu, ladite cellule comportant ce nouvel en-tête étant ensuite transmise par lesdits organes tampon pour cellules vers ledit bus d'entrée de données [IB(m)].

11. Elément de commutation de communication selon la revendication 10, caractérisé en ce que les tables d'acheminement (RT) desdits moyens de réception [RP(1) à RP(M)] sont couplées (ADP, B5, B4; figure 3) à des moyens communs de traitement (PR; figure 2) susceptibles de mettre à jour le fonctionnement desdites tables d'acheminement.

12. Elément de commutation de communication selon la revendication 11, caractérisé en ce que lesdits moyens commun de traitement (PR) sont couplés aux organes tampon pour cellules (SCB) desdits moyens de réception [RP(1) à RP(M)] afin de pouvoir transmettre à travers eux des cellules venant desdits moyens communs de traitement et destinées aux bus d'entrée de données correspondants (IB(1) à IB(M)].

13. Elément de commutation de communication selon la revendication 11, caractérisé en ce que les organes tampon pour cellules (SCB) desdits moyens de réception (RP(1) à RP(M)] sont couplés auxdits moyens communs de traitement (PR) afin de leur transmettre des cellules reçues sur le port d'entrée correspondant [I(1) à I(M)].

14. Elément de commutation de communication selon la revendication 1, caractérisé en ce que lesdits organes tampon [Q(1n) à Q(Mn)] sont constitués de mémoires premier entré-premier sorti (FIFO) capables de stocker une pluralité desdites cellules.
